# EUROPÄISCHE PATENTANMELDUNG

(11) **EP 2 594 602 A2**
(43) Veröffentlichungstag der Anmeldung: **22.05.2013**
(21) Anmeldenummer: 12006732.7
(22) Anmeldetag: 26.09.2012
(51) Int. Cl.: C08J 9/00, C08J 9/12, H01M 8/10

(54) **Verfahren zur Herstellung eines Adsorbematerials mit komplexer Geometrie, insbesondere eines Adsorberschaums, ein nach dem Verfahren hergestelltes Adsorbematerial mit komplexer Geometrie, insbesondere ein Adsorberschaum, und ein Filter mit einem entsprechenden Adsorbermaterial, insbesondere mit einem entsprechenden Adsorberschaum**

(30) Priorität: 29.09.2011 DE 102011114514
(71) Anmelder: Carl Freudenberg KG, 69469 Weinheim (DE)
(72) Erfinder: Gruber, Achim, 69250 Schönau (DE); Geiss, Franka, Dr., 69509 Mörlenbach (DE); Schmitz, Christof, Dr., 68305 Mannheim (DE); Frackmann, Gernot, Dr., 21449 Radbruch (DE)

(57) **Zusammenfassung**

Es soll ein besonders wirtschaftliches Verfahren zur Herstellung eines Adsorbermaterials mit komplexer Geometrie, bevorzugt eines Adsorbermaterials mit dreidimensionaler Geometrie, besonders bevorzugt ein besonders wirtschaftliches Verfahren zur Herstellung eines Adsorberschaums bereitgestellt werden, das besonders wenige Prozessschritte erfordert, eine besonders homogene Verteilung des Adsorbermaterials gewährleistet sowie eine besonders gute Fixierung an den Träger-Körper ohne die Verwendung von Bindemitteln, Klebern oder Haftvermittlern erlaubt

Erfindungsgemäß wird bei dem

Verfahren zur Herstellung eines Adsobermaterials mit komplexer Geometrie, insbesondere bei dem Verfahren zur Herstellung eines Adsorberschaums,
- in einen noch flüssigen, aufzuschäumenden und polymersierbaren Grundkörper oder polyreaktiven Grundkörper ein Adsorbermaterial homogen eingearbeitet,
- der polymersierbare oder polyreaktive Grundkörper zur Polymerisation oder Polyreaktion gebracht, und der entstehende Polymer-Körper, insbesondere der entstehende Kunststoff oder das entstehende Kunstharz, mit dem eingearbeiteten bzw. eingebetteten Adsorbermaterial in-situ aufgeschäumt und
- retikuliert.

## Beschreibung

Die vorliegende Erfindung betrifft ein Verfahren zur Herstellung eines Adsorbermaterials mit komplexer Geometrie, insbesondere ein Verfahren zur Herstellung eines Adsorberschaums, ein nach dem Verfahren hergestelltes Adsorbermaterial mit komplexer Geometrie, insbesondere einen Adsorberschaum, und einen Filter mit einem entsprechenden Adsorbermaterial, insbesondere mit einem entsprechenden Adsorberschaum.

### Stand der Technik

Adsorber kommen in vielen Bereichen der industriellen Auf- und Verarbeitung zum Einsatz. Im Gegensatz zu reinen Filtern arbeiten Adsorber nicht nur größenselektiv, sondern auch in Bezug auf chemische Eigenschaften. Somit ist es möglich, durch die geeignete Auswahl unterschiedlicher Adsorbermaterialien spezielle Komponenten für spezifische Anwendungen zu adsorbieren. In einigen Prozessen ist es notwendig, Filter und Adsorber zu kombinieren, um eine vollständige Entfernung unerwünschter Komponenten zu erreichen.

Das Dokument DE 38 13 563 C2 offenbart einen Adsorptionsfilter, welcher ein formstabiles dreidimensionales Trägergerüst mit einer fixierten, körnigen Adsorberschicht aufweist. Das Trägergerüst kann aus Metall-Drähten, Monofilamenten oder Stegen aufgebaut sein.

Des Weiteren kann als Trägergerüst ein großporiger retikulierter Polyurethan-Schaum verwendet werden.

Solche Schäume werden in bekannter Weise dadurch hergestellt, dass zunächst ein großer in einer geschlossenen Kammer befindlicher offenporiger Schaumblock evakuiert wird. Dann lässt man ein explosives Gasgemisch einströmen und zündet dieses. Durch die Explosion werden die Zellwände zerstört und schmelzen zu Stegen zusammen. Deshalb haben retikulierte Schäume keine Wandungen, sondern bestehen nur aus einem Gitterwerk von Stegen, die Käfige eines Durchmessers von etwa 1 bis 5 mm bilden. Die offenporige Struktur erlaubt auch im Inneren eine Ummantelung mit Adsorberkügelchen bzw. -partikeln. Um die Adsorberteilchen am Trägergerüst zu fixieren, werden Klebstoffe oder Haftmittel verwendet. Als Adsorberpartikel wird gemäß Dokument DE 38 13 563 A1 auch Aktivkohle eingesetzt.

In Dokument DE 38 13 564 C2 wird eine Aktivkohleschicht für Gasmasken beschrieben. Diese zeigt den gleichen Aufbau wie der Adsorberfilter gemäß Dokument DE 38 13 563 A1. Auch dieses Filtersystem weist ein Trägergerüst aus retikuliertern Polyurethan-Schaum auf, welcher mit Aktivkohlepartikeln umhüllt ist.

### Darstellung der Erfindung

Die vorliegende Erfindung hat sich die Aufgabe gestellt, ein besonders wirtschaftliches Verfahren zur Herstellung eines Adsorbermaterials mit komplexer Geometrie, bevorzugt mit dreidimensionaler Geometrie, besonders bevorzugt ein wirtschaftliches Verfahren zur Herstellung eines Adsorberschaums bereitzustellen, das besonders wenige Prozessschritte erfordert, eine besonders homogene Verteilung des Adsorbermaterials gewährleistet sowie eine besonders gute Fixierung an die Träger-Matrix oder an den Träger-Körper ohne die Verwendung von Bindemitteln, Klebern oder Haftvermittlern.

Des Weiteren soll der danach hergestellte Adsorberschaum bevorzugt geeignet sein bzw. einsetzbar sein für die Filtration, insbesondere von Flüssigkeiten und/oder Gasen, bevorzugt als oder in Filter(n) für Brennstoffzellen, Innenraumfilter(n), Zuluftstrom, insbesondere im Automobilbereich, für Dunstabzüge, Objektklimatisierung, für medizinische Anwendungen, Atemschutz, Trinkwasseraufbereitung bzw. -aufreinigung und/oder für Funktionstextilien.

Erfindungsgemäß wird bei dem Verfahren zur Herstellung eines Adsobermaterials mit komplexer Geometrie, insbesondere mit dreidimensionaler Geometrie, insbesondere bei dem Verfahren zur Herstellung eines Adsorberschaums,
- in einen noch flüssigen, aufzuschäumenden und polymersierbaren Grundkörper oder polyreaktiven Grundkörper ein Adsorbermaterial homogen eingearbeitet,
- der polymersierbare oder polyreaktive Grundkörper zur Polymerisation oder Polyreaktion gebracht und der entstehende Polymer-Körper, insbesondere der entstehende Kunststoff oder das entstehende Kunstharz, mit dem eingearbeiteten bzw. eingebetteten Adsorbermaterial in-situ aufgeschäumt und
- retikuliert.

Zur Polymer-Herstellung aus Monomeren wird hier insbesondere unter der Polymerisation eine Kettenwachstumsreaktion und unter der Polyreaktion eine Stufenwachstumsreaktion in Form einer Polyaddition oder in Form einer Polykondensation verstanden.

Die Herstellung des Polymer-Körpers aus einem polymersierbaren Grundkörper oder aus einem polyreaktiven Grundkörper, beispielsweise die Herstellung von Polyurethanschaumstoffen durch Polyaddition von Polyisocyanaten mit Verbindungen mit mindestens zwei reaktiven Wasserstoffatomen, ist seit langem bekannt und wurde vielfach beschrieben. Eine zusammenfassende Übersicht über die Herstellung von Polyurethanschaumstoffen wird zum Beispiel im Kunststoff-Handbuch, Band VII, "Polyurethane", 3. Auflage, 1993, herausgegeben von Dr. G. Oertel (Carl Hanser Verlag, München) gegeben.

Die direkte Einarbeitung des Adsorbermaterials in den polymersierbaren Grundkörper oder in den polyreaktiven Grundkörper und das In-Situ-Aufschäumen des durch Polymerisation oder Polyreaktion entstehenden Polymer-Körpers sind besonders prozessökonomisch und/oder ökologisch.

Ein nachträgliches Einbringen des Adsorbermaterials in den Polymer-Körper, insbesondere in den fertigen Kunststoff- oder Kunstharzschaum, führt nämlich bereits zu einer Filterwirkung für das einzubringende Adsorbermaterial und somit zu einem Gradienten in der Verteilung des Adsorbermaterials. Das bedeutet beispielsweise eine besonders starke Konzentration des Adsorbermaterials im oberen Filterbereich und eine besonders geringe Konzentration im unteren Filterbereich. Gleiches gilt für eine ein- oder beidseitige Beschichtung des Polymer-Körpers mit dem Adsorbermaterial, wobei insbesondere die Beschichtungsseiten eine besonders starke Konzentration des Adsorbermaterials aufweisen und die Mitte bzw. der Kern des beschichteten Körpers nur einen vergleichsweise geringen Anteil an Adsorbermaterial aufweist.

Ein durch nachträgliches Einbringen des Adsorbermaterials oder ein durch Beschichtung mit dem Adsorbermaterial resultierender Verteilungsgradient ist vorliegend, insbesondere für viele anspruchsvolle technische Anwendungen, gerade nicht erwünscht.

Mit dem vorliegenden Verfahren ist zudem die Herstellung komplexer Bauteilgeometrien, beispielsweise für Filter, insbesondere dreidimensionaler Formen, wie zum Beispiel auch sphärisch geformter Bauteile, möglich. Dies geschieht insbesondere durch ein Reinschäumen bzw. Aufschäumen in entsprechend geformte Kavitäten bzw. Aushöhlungen. Damit erübrigt sich ein bei anderen Verfahren häufig erforderliches anschließendes Zuschneiden in gewünschte Bauteilgeometrien.

Die erfindungsgemäße homogene Verteilung des Adsorbermaterials ohne Gradienten erlaubt eine besonders hohe Effektivität insbesondere mit Blick auf besonders kleine Bauteile. Die Minimierung des benötigten Volumens ist für viele Bauteile mit Filterwirkung, insbesondere im Industriebereich, besonders bedeutsam.

Des Weiteren ist die feste Anbringung des Adsorbermaterials an die Polymermatrix bzw. den Polymer-Körper ohne nachträgliche oder zusätzliche Fixierung mit Bindemitteln, Klebern oder Haftvermittlern für viele anspruchsvolle technische Anwendungen von besonderer Bedeutung. Dies gilt zum Beispiel für Filter, insbesondere für Brennstoffzellen, da damit beispielsweise ein Ausdampfen von möglicherweise gesundheitsschädlichen und/oder prozessbeeinträchtigenden Stoffen aus den zusätzlichen Bindemitteln, Klebern oder Haftvermittlern verhindert wird.

Beim abschließenden Retikulieren werden die geschlossenen Zellwände des geschäumten Polymer-Körpers, beispielsweise des Kunststoff- oder Kunstharzschaums, mit einem industrietypischen Retikulierprozess aufgebrochen, wodurch der Durchströmungswiderstand verringert wird.

Bevorzugt wird vorliegend die sogenannte Wasser-Retikulierung eingesetzt. Dabei wird ein Gemisch aus gasförmigen, brennbaren Stoffen, zum Beispiel Knallgas, gleichzeitig mit dem Zündimpuls mit ca. + 185°C heißem Wasserdampf unter Druck vermengt. Es wird eine exotherme Reaktion eingeleitet, und diese bewirkt durch die explosiv freiwerdende Reaktionswärme eine Perforierung der Schaumstoff-Zellwände und deren gezielte Sinterung zu einer Stegstärke der Gerüstsubstanz des Schaumstoffs.

Die Fixierung des Adsorbermaterials an dem geschäumten Polymer-Körper mit der nach der Retikulierung resultierenden Gerüststruktur bleibt erhalten, das heißt, das Adsorbermaterial wird nicht vom Polymer-Körper abgelöst. Auch dieser Effekt des Nichtablösens des Adsorbermaterials zeichnet die vorliegende Erfindung aus, da dadurch eine Beeinträchtigung der Funktionsweise des mit dem Adsorberschaum ausgerüsteten Bauteils vermieden wird.

Bevorzugt wird bei der Herstellung des Adsorbermaterials mit komplexer Geometrie, insbesondere des Adsorberschaums, durch die Polymerisationsreaktion oder Polyreaktion als Polymer-Körper Polyurethan (PU), Epoxidharz, Phenol- und/oder Melaminharz, Nitril-Butadien-Kautschuk (NBR) und/oder Fluor(-Karbon)-Kautschuk (FKM) gebildet.

Dabei werden Polyurethane insbesondere für weiche oder elastische Anwendungsbereiche, Epoxidharze insbesondere für elektrische Anwendungen Phenol- und/oder Melaminharze insbesondere für Hochtemperaturanwendungen und/oder Latices, wie zum Beispiel NBR für wasser- und FKM insbesondere für chemikalienbeständige Anwendungen eingesetzt.

In vorteilhafter Ausgestaltung des Verfahrens wird das Adsorbermaterial, insbesondere aus technischen und aus anwendungsbezogenen Gründen, in einer Menge von 30 bis 80 Gew.-%, bevorzugt in einer Menge von 50 bis 60 Gew.%, eingesetzt.

Vorteilhafterweise werden als Adsorbermaterial Aktivkohle, Zeolithe und/oder Bentonite, eingesetzt, aus technischen und aus anwendungsbezogenen Gründen bevorzugt mit einer Korngröße von 0,1 bis 2 mm. Diese Korngröße führt zu einer guten Dispergierbarkeit des Adsorbermaterials. Hierbei ist vorteilhaft, dass das Adsorbermaterial homogen verteilt im Adsorberschaum vorliegt.

Für katalytische Anwendungszwecke könnten funktionalisierte Adsorbermaterialien eingesetzt werden. Diese könnten Enzyme, Metalle und/oder Metallsalzen enthalten.

Vorzugsweise wird für das In-Situ-Aufschäumen, insbesondere aus Arbeitssicherheits- und Umweltaspekten, als Treibmittel demineralisiertes Wasser oder Kohlendioxid eingesetzt. Selbstverständlich können jedoch auch andere üblicherweise verwendete Treibmittel, wie zum Beispiel Methan oder Pentan, zum Einsatz kommen.

Durch den Gas- und/oder Wassereinsatz wird die Oberfläche des Adsorbermaterials, bevorzugt die Aktivkohle, zusätzlich freigelegt.

Des Weiteren können in vorteilhafter Ausgestaltung des Verfahrens zusätzliche Komponenten, wie zum Beispiel Katalysatoren, Emulgatoren oder Stabilisatoren, Verwendung finden.

Der insbesondere nach dem erfindungsgemäßen Verfahren erhältliche oder hergestellte Adsorberschaum weist einen geschäumten und retikulierten Polymer-Körper mit aufgebrochenen Zellwänden bzw. Zellstegen auf, wobei das Adsorbermaterial, insbesondere die Adsorberpartikel, ohne zusätzliche Bindemittel, Kleber oder Haftvermittler in den bzw. auf den aufgebrochenen Zellwänden bzw. Zellstegen homogen verteilt und fest eingebettet oder fixiert ist bzw. sind. Vorteilhafterweise weist der Adsorberschaum keinen Binder, Kleber oder Haftvermittel auf, wodurch unerwünschte Wechselwirkungen mit dem Filtrat verhindert werden können. Ferner kann bei der Herstellung des Adsorberschaums auf Binder, Kleber oder Haftvermittel verzichtet werden, wodurch der Adsorberschaum kostengünstig und materialsparend hergestellt werden kann.

Gemäß einer bevorzugten Ausführungsform umfasst der Adsorberschaum einen geschäumten und retikulierten Polymer-Körper mit aufgebrochenen Zellwänden bzw. Zellstegen, wobei das Adsorbermaterial, insbesondere Adsorberpartikel, ohne zusätzliche Bindemittel, Kleber oder Haftvermittler in den und/oder auf den aufgebrochenen Zellwänden bzw. Zellstegen homogen verteilt und fixiert ist und wobei der Polymer-Körper Hohlräume aufweist. Vorteilhafterweise findet in einem Adsorberschaum, dessen Polymer-Körper Hohlräume aufweist, ein gleichmäßiges Durchströmen eines Fluids durch den Adsorberschaum statt. Gleichzeitig sind der Strömungswiderstand und der Druckverlust gering. Die Höhlräume könnten unterschiedliche Größen aufweisen.

Der insbesondere nach dem erfindungsgemäßen Verfahren erhältliche oder hergestellte Adsorberschaum eignet sich besonders zur Verwendung in Filtern, insbesondere für Brennstoffzellen. Aufgrund des fehlenden Binders, Klebers oder Haftvermittlers können unerwünschte Wechselwirkungen zwischen Brennstoffzellen-Zuluft und Binder, Kleber oder Haftvermittler verhindert werden. Dies erhöht die Lebensdauer des Filters. Ferner zeichnet sich der Filter durch eine hohe mechanische Belastbarkeit aus.

Ein solcher bevorzugter Filter, insbesondere für Brennstoffzellen, umfasst somit einen erfindungsgemäßen Adsorberschaum mit einem geschäumten und retikulierten Polymer-Körper mit aufgebrochenen Zellwänden bzw. Zellstegen, wobei das Adsorbermaterial ohne zusätzliche Bindemittel, Kleber oder Haftvermittler in den bzw. auf den aufgebrochenen Zellwänden bzw. Zellstegen homogen verteilt und fest eingebettet oder fixiert ist.

### Ausführung der Erfindung

Der Gegenstand der Erfindung wird nachfolgend anhand von Beispielen näher erläutert.

Zur Herstellung eines Adsobermaterials mit komplexer Geometrie, insbesondere eines Adsorberschaums, werden zunächst in einen noch flüssigen und polymerisierbaren oder polyreaktiven Grundkörper 30 bis 80 Gew.-%, bevorzugt 50 bis 60 Gew.-%, an Adsorbermaterial, wie beispielsweise Aktivkohle, Zeolithe oder Bentonite, insbesondere mit einer Korngröße der Adsorberpartikel von 0,1 bis 2,0 mm, homogen eingearbeitet.

Weiterhin können funktionalisierte Adsorbermaterialien, zum Beispiel zum Einsatz für katalytische Zwecke, verwendet werden.

Anschließend wird der polymersierbare oder polyreaktive Grundkörper zur Polymerisation oder Polyreaktion gebracht und der entstehende Polymer-Körper, insbesondere der entstehende Kunststoff oder das entstehende Kunstharz, mit dem homogen eingearbeiteten bzw. eingebetteten Adsorbermaterial in-situ aufgeschäumt und danach retikuliert.

Die Herstellung des Polymer-Körpers aus einem polymersierbaren Grundkörper oder aus einem polyreaktiven Grundkörper, beispielsweise die Herstellung von Polyurethanschaumstoffen durch Polyaddition von Polyisocyanaten mit Verbindungen mit mindestens zwei reaktiven Wasserstoffatomen, ist seit langem bekannt und wurde vielfach beschrieben. Eine zusammenfassende Übersicht über die Herstellung von Polyurethanschaumstoffen wird zum Beispiel im Kunststoff-Handbuch, Band VII, "Polyurethane", 3. Auflage, 1993, herausgegeben von Dr. G. Oertel (Carl Hanser Verlag, München) gegeben.

Bevorzugt wird vorliegend die sogenannte Wasser-Retikulierung eingesetzt. Dabei wird ein Gemisch aus gasförmigen, brennbaren Stoffen, zum Beispiel Knallgas, gleichzeitig mit dem Zündimpuls mit ca. + 185°C heißem Wasserdampf unter Druck vermengt. Es wird eine exotherme Reaktion eingeleitet, und diese bewirkt durch die explosiv freiwerdende Reaktionswärme eine Perforierung der Schaumstoff-Zeilwände und deren gezielte Sinterung zu einer Stegstärke der Gerüstsubstanz des Schaumstoffs.

Die nachfolgenden Tabellen zeigen die für die Herstellung der Adsorberschäume A und B eingesetzten Komponenten in der Reihenfolge der Zugabe. Das Komponenten-Gemisch wird in-situ aufgeschäumt. Die Reaktion erfolgt jeweils bei ca. 80°C bis 90°C und ist nach einer Stunde vollständig abgelaufen.

Beim abschließenden Retikulieren werden die geschlossenen Zellwände des Polyurethanschaums mit einem industrietypischen Retikulierprozess, beispielsweise mit der oben beschriebenen Wasser-Retikulierung, aufgebrochen, wodurch der Durchströmungswiderstand verringert wird.

**Tabelle 1:**

| **Komponenten zur Herstellung des Adsorberschaums A,** | | | |
|---|---|---|---|
| Polyurethanschaum mit 50,5 Gew.-% Aktivkohle als Adsorbermaterial | | | |
| **Komponente** | **Bezeichnung** | **Hersteller** | **Gew.-%** |
| Polyol | Capa 7201 | Perstorp | 20,4 |
| Treibmittel | demineralisiertes Wasser | | 0,7 |
| Kettenverlängerer | 1,4-Butandiol | BASF | 0,5 |
| Katalysator | Dabco 33LV | Airproducts | 0,4 |
| Emulgator | Emulan EL | BASF | 0,6 |
| Stabilisator | Tegostab | Evonik | 0,2 |
| Aktivkohle | 30x60 CY | Jacobi | 50,5 |
| Isocyanatkomponente | MDI-Prepolymer | Freudenberg | 26,9 |

**Tabelle 2:**

| **Komponenten zur Herstellung des Adsorberschaums A,** | | | |
|---|---|---|---|
| Polyurethanschaum mit 60 Gew.-% Aktivkohle als Adsorbermaterial | | | |
| **Komponente** | **Bezeichnung** | **Hersteller** | **Gew.-%** |
| Polyol | Capa 7201 | Perstorp | 16,5 |
| Treibmittel | demineralisiertes Wasser | | 0,4 |
| Kettenverlängerer | 1,4-Butandiol | BASF | 0,4 |
| Katalysator | Dabco 33LV | Airproducts | 0,3 |
| Emulgator | Emulan EL | BASF | 0,5 |
| Stabilisator | Tegostab | Evonik | 0,2 |
| Aktivkohle | 30x60 CY | Jacobi | 60,0 |
| Isocyanatkomponente | MDI-Prepolymer | Freudenberg | 21,7 |

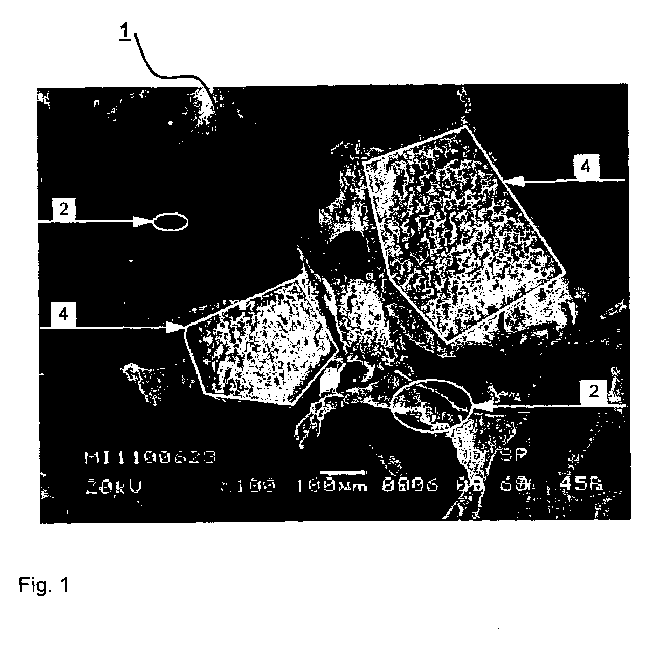

Die Figur 1 zeigt eine Rasterelektronenmikroskop (REM)-Aufnahme des insbesondere nach dem erfindungsgemäßen Verfahren hergestellten Adsorberschaums B.

Der Adsorberschaum 1 weist, wie in Figur 1 gezeigt, einen geschäumten und retikulierten Polymer-Körper auf, insbesondere einen retikullerten Polyurethan-Schaum, mit nach der Retikulierung aufgebrochenen Zellwänden bzw. mit Zellstegen 2, wobei das Adsorbermaterial, insbesondere Aktivkohlepartikel als Adsorberpartikel 4, ohne zusätzliche Bindemittel, Kleber oder Haftvermittler in den bzw. auf den aufgebrochenen Zellwänden bzw. Zellstegen 2 homogen verteilt und fixiert ist bzw. sind.

## Patentansprüche

1. Verfahren zur Herstellung eines Adsobermaterials mit komplexer Geometrie, bei dem
- in einen noch flüssigen, aufzuschäumenden und polymersierbaren oder polyreaktiven Grundkörper ein Adsorbermaterial homogen eingearbeitet wird,
- der polymersierbare oder polyreaktive Grundkörper zur Polymerisation oder Polyreaktion gebracht wird, und der entstehende Polymer-Körper mit dem eingearbeiteten bzw. eingebetteten Adsorbermaterial in-situaufgeschäumt wird und
- retikuliert wird.

2. Verfahren nach Anspruch 1, bei dem durch die Polymerisation oder Polyreaktion als Polymer-Körper Polyurethan (PU), Epoxidharz, Phenol- und/oder Melaminharz, Nitril-Butadien-Kautschuk (NBR) und/oder Fluor(-Karbon)-Kautschuk (FKM) gebildet wird.

3. Verfahren nach Anspruch 1 oder 2, bei dem das Adsorbermaterial in einer Menge von 30 bis 80 Gew.-% eingesetzt wird.

4. Verfahren nach einem der vorhergehenden Ansprüche, bei dem als Adsorbermaterial Aktivkohle, Zeolithe und/oder Bentonite mit einer Korngröße der Adsorberpartikel (4) von 0,1 bis 2 mm eingesetzt werden.

5. Verfahren nach einem der vorhergehenden Ansprüche, bei dem als Treibmittel für das In-Situ-Aufschäumen demineralisiertes Wasser oder Kohlendioxid eingesetzt wird.

6. Verfahren nach einem der vorhergehenden Ansprüche, **dadurch gekennzeichnet, dass** das Adsorbermaterial mit komplexer Geometrie als Adsorberschaum abgebildet ist.

7. Adsorberschaum (1), erhältlich durch oder hergestellt nach einem Verfahren nach einem der vorhergehenden Ansprüche, der einen geschäumten und retikulierten Polymer-Körper mit aufgebrochenen Zellwänden bzw. Zellstegen (2) aufweist, wobei das Adsorbermaterial, insbesondere Adsorberpartikel (4), ohne zusätzliche Bindemittel, Kleber oder Haftvermittler in den bzw. auf den aufgebrochenen Zellwänden bzw. Zelistegen (2) homogen verteilt und fixiert ist bzw. sind.

8. Adsoberschaum (1), umfassend einen geschäumten und retikulierten Polymer-Körper mit aufgebrochenen Zellwänden bzw. Zellstegen (2), wobei das Adsorbermaterial, insbesondere Adsorberpartikel (4), ohne zusätzliche Bindemittel, Kleber oder Haftvermittler in den und/oder auf den aufgebrochenen Zellwänden bzw. Zellstegen (2) homogen verteilt und fixiert ist, **dadurch gekennzeichnet, dass** der Polymer-Körper Hohlräume aufweist.

9. Filter, umfassend einen Adsorberschaum (1) nach Anspruch 7 bzw. nach einem Verfahren gemäß einem der Ansprüche 1 bis 6 erhältlichen oder hergestellten Adsorberschaum (1), der einen geschäumten und retikulierten Polymer-Körper mit aufgebrochenen Zellwänden bzw. Zellstegen (2) aufweist, wobei das Adsorbermaterial, insbesondere Adsorberpartikel (4), ohne zusätzliche Bindemittel, Kleber oder Haftvermittler in den bzw. auf den aufgebrochenen Zellwänden bzw. Zellstegen (2) homogen verteilt und fixiert ist bzw. sind.

10. Verwendung eines Filters nach Anspruch 9 für Brennstoffzellen.
